# EUROPÄISCHE PATENTANMELDUNG

(11) **EP 0 674 186 A2**
(43) Veröffentlichungstag der Anmeldung: **27.09.1995**
(21) Anmeldenummer: 94113984.2
(22) Anmeldetag: 07.09.1994
(51) Int. Cl.: G01S 17/93

(54) **Vorrichtung zur Erfassung und Klassifizierung von sich vorzugsweise auf Start- und Landebahnen oder Rollwegen bewegenden Flugzeugen oder Fahrzeugen**

(30) Priorität: 23.03.1994 DE 4409996
(71) Anmelder: Daimler-Benz Aerospace Aktiengesellschaft, D-81663 München (DE)
(72) Erfinder: Storm, Ditmar, Dipl.-Ing., D-22880 Wedel (DE)
(74) Vertreter: Salhoff, Roland, Dipl.-Ing.

(57) **Zusammenfassung**

Vorrichtung zur Erfassung und Klassifizierung von unterschiedlichen Flugzeugen oder Fahrzeugen und zur Ermittlung von Rollführungsdaten, unter Verwendung einer Lasersendereinrichtung und einer Laserempfangseinrichtung mit nachgeordneter Auswerteeinheit. Eine höhere Auswertungsgenauigkeit wird dadurch erreicht, daß als Lasersendereinrichtung ein Zeilenscanner (4) vorgesehen ist, der zwei in einem vorgegebenen Winkel (α) zueinander stehende vertikale Zeilen (5) von Laserstrahlen (A, B) aussendet. Der Zeilenscanner (4) tastet die Flugzeuge (3) oder Fahrzeuge mit den zwei vertikalen Zeilen (5) von Laserstrahlen in nahezu einem rechten Winkel zur Start- und Landebahn oder zum Rollweg (1) ab. Die Laserempfangseinrichtung empfängt die von den Flugzeugen (3) oder Fahrzeugen reflektierten Laserstrahlen, wobei die der Laserempfangseinrichtung nachgeordnete Auswerteeinheit aus den gemessenen Laufzeiten der reflektierten Laserstrahlen (A, B) beider vertikaler Zeilen (5) und gegebenenfalls unter Berücksichtigung des vorgegebenen Winkels (α) zwischen den vertikalen Zeilen (5) die Rollführungsdaten ermittelt.

## Beschreibung

Die Erfindung betrifft eine Vorrichtung zur Erfassung und Klassifizierung von sich vorzugsweise auf Start- und Landebahnen oder Rollwegen bewegenden unterschiedlichen Flugzeugen oder Fahrzeugen und zur Ermittlung von Rollführungsdaten, insbesondere von Entfernungs-, Geschwindigkeits- und Rollrichtungswerten, unter Verwendung einer Lasersendereinrichtung und einer Laserempfangseinrichtung mit nachgeordneter Auswerteeinheit.

Es ist bekannt, zur eingangs beschriebenen Erfassung von Flug- oder Fahrzeugen Induktionsschleifen zu verwenden. Mit Hilfe von Doppel-Induktionsschleifen kann zwar die Fahrtrichtung eines Flug- oder Fahrzeuges bestimmt werden, jedoch ist eine Geschwindigkeitsbestimmung nur mit Einschränkungen sowie eine Klassifizierung der Fahrzeuge nur eingeschränkt möglich. Von Nachteil ist auch, daß die Induktionsschleifen aufwendige Fräsarbeiten im Beton der Start- und Landebahnen oder der Rollwege und somit eine aufwendige Installation erfordern.

Der Einsatz eines Vorfeldradars für den eingangs genannten Zweck ist bekannt, bringt jedoch nachteiligerweise eine ungenaue Bestimmung des Ortes und der Geschwindigkeit der zu erfassenden Flug- oder Fahrzeuge mit sich.

Der Erfindung liegt die Aufgabe zugrunde, eine Vorrichtung der eingangs genannten Art zu schaffen, die eine höhere Auswertungsgenauigkeit bezüglich der ermittelten Geschindigkeit und der Typ-Klassifizierung der Flug- oder Fahrzeuge ermöglicht.

Die Aufgabe wird erfindungsgemäß dadurch gelöst, daß als Lasersendereinrichtung ein Zeilenscanner vorgesehen ist, der zwei in einem vorgegebenen Winkel α zueinander stehende vertikale Zeilen von Laserstrahlen aussendet, daß der Zeilenscanner die Flugzeuge oder Fahrzeuge mit den zwei vertikalen Zeilen von Laserstrahlen in nahezu einem rechten Winkel zur Start- und Landebahn oder zum Rollweg abtastet, daß die Laserempfangseinrichtung die von den Flugzeugen oder Fahrzeugen reflektierten Laserstrahlen empfängt, und daß die der Laserempfangseinrichtung nachgeordnete Auswerteeinheit aus den gemessenen Laufzeiten der reflektierten Laserstrahlen beider vertikaler Zeilen und gegebenenfalls unter Berücksichtigung des vorgegebenen Winkels α zwischen den vertikalen Zeilen die Rollführungsdaten ermittelt.

Ein Vorteil der Erfindung liegt darin, daß die Vorrichtung einfach und kostengünstig auf Flugplätzen montiert werden kann.

Ausgestaltungen der Erfindung sind in den Unteransprüchen 2 bis 9 beschrieben.

In der Zeichnung ist ein Ausführungsbeispiel nach der Erfindung dargestellt, und zwar zeigt:
- Fig. 1: eine Draufsicht auf einen Rollweg mit Randbefeuerung und einer Vorrichtung zur Erfassung eines Flugzeuges, und
- Fig. 2: eine Vorderansicht eines von den vertikalen Laserstrahlen eines Zeilenscanners abgetasteten Flugzeuges.

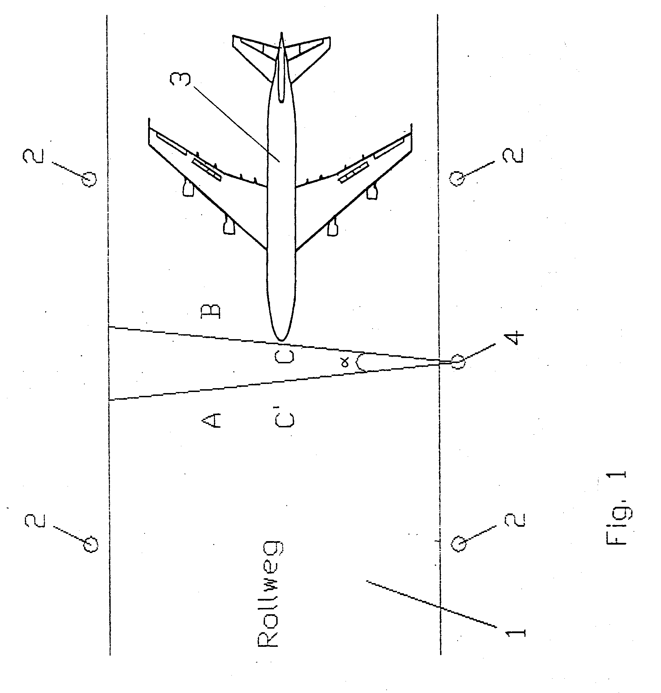

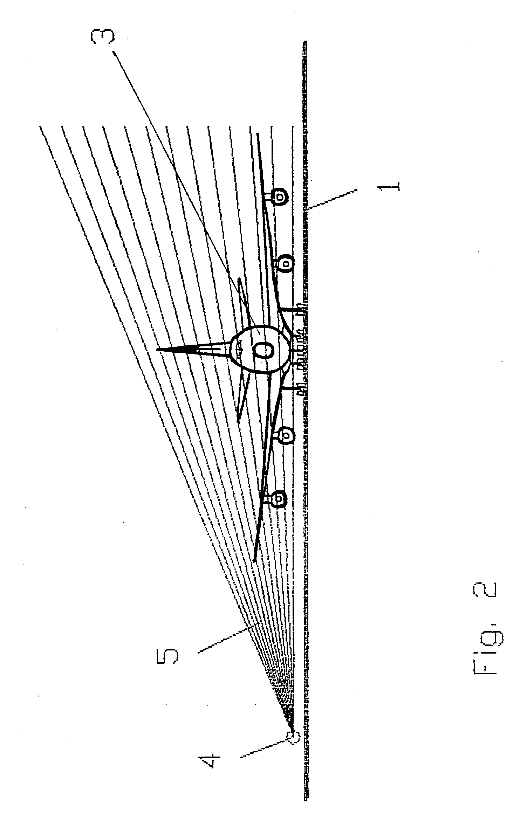

In Fig. 1 sind im Randbereich eines Rollweges 1 die Lampen 2 einer Randbefeuerung angeordnet. Zwischen zwei Lampen 2 befindet sich eine Vorrichtung zur Erfassung eines sich auf dem Rollweg 1 bewegenden Flugzeuges 3 oder auch eines Fahrzeuges, beispielsweise eines Schleppfahrzeuges, dessen Rollführungsdaten wie Entfernung, Geschwindigkeit und Rollrichtung ermittelt werden sollen. Diese Vorrichtung weist zum einen als Lasersendereinrichtung einen Zeilenscanner 4 auf, der zwei in einem vorgegebenen Winkel α zueinander stehende vertikale Zeilen von Laserstrahlen A bzw. B in einem nahezu rechten Winkel zum Rollweg 1 aussendet, und zum anderen eine zeichnerisch nicht dargestellte Laserempfangseinrichtung mit nachgeordneter ebenfalls zeichnerisch nicht dargestellter Auswerteeinheit. Die von dem Zeilenscanner 4 ausgesandten vertikalen Zeilen von Laserstrahlen A oder B sind aus Fig. 2 ersichtlich und dort mit 5 bezeichnet.

Der Zeilenscanner 4 und die Laserempfangseinrichtung können in einem modifizierten Gehäuse eines Unterflurfeuers oder eines Überflurfeuers montiert sein, wobei die Versorgung dieser Geräte mit elektrischer Energie über bereits für die Randbefeuerung installierte Serienkreiskabel erfolgen kann. Auch kann über diese Serienkreiskabel eine Datenkommunikation durchgeführt werden.

Das sich in Bugrichtung bewegende Flugzeug 3 kommt zunächst in den Erfassungsbereich der von dem Zeilenscanner 4 ausgesandten vertikalen Zeile 5 von Laserstrahlen B. Sobald von dem Flugzeug 3 reflektierte Laserstrahlen von der Laserempfangseinrichtung empfangen werden, wird die Entfernung vom Zeilenscanner 4 zum Flugzeugnasenpunkt C gemessen und die Auswerteeinheit erzeugt ein "Belegt"-Meldesignal. Anschließend kommt das Flugzeug 3 in den Erfassungsbereich der von dem Zeilenscanner 4 ausgesandten vertikalen Zeile 5 von Laserstrahlen A, wobei die Entfernung vom Zeilenscanner 4 zum Flugzeugnasenpunkt C'ermittelt wird. Aus den ermittelten Entfernungswerten zwischen dem Zeilenscanner 4 und den Punkten C und C', dem vorgegebenen Winkel α zwischen den beiden vertikalen Zeilen 5 von Laserstrahlen A und B und aus der Zeitdauer für das Rollen des Flugzeuges 3 vom Punkt C zum Punkt C', (d. h. dem zeitlichen Abstand zwischen den beiden durchgeführten Entfernungsmessungen) sowie aus der Tatsache, daß das Flugzeug 3 zuerst Punkt C und dann Punkt C'erreicht, errechnet die Auswerteeinheit die Rollführungsdaten des Flugzeuges 3, wie Flugzeuggeschwindigkeit und -richtung.

Durch die Verwendung eines Zeilenscanner 4 und damit durch die Abtastung der Flugzeuge 3 oder von Fahrzeugen mit vertikalen Zeilen 5 von Laserstrahlen A, B - wie in Fig. 2 dargestellt - kann aus den reflektierten Laserstrahlen die Kontur der abgetasteten Flug- oder Fahrzeuge durch die Auswerteeinheit bestimmt werden. Durch Vergleich der ermittelten Kontur mit charakteristischen Kenngrößen von Flugzeugen 3 oder Fahrzeugen kann mittels der Auswerteeinheit ermittelt werden, ob es sich bei dem abgetasteten Objekt um ein Flugzeug 3 oder um ein Fahrzeug handelt. Wurde beispielsweise ein Flugzeug 3 erkannt, kann seine Größenklasse ermittelt, d.h. es kann eine Klassifizierung durchgeführt werden.

## Patentansprüche

1. Vorrichtung zur Erfassung und Klassifizierung von sich vorzugsweise auf Start- und Landebahnen oder Rollwegen bewegenden unterschiedlichen Flugzeugen oder Fahrzeugen und zur Ermittlung von Rollführungsdaten, insbesondere von Entfernungs-, Geschwindigkeits- und Rollrichtungswerten, unter Verwendung einer Lasersendereinrichtung und einer Laserempfangseinrichtung mit nachgeordneter Auswerteeinheit, dadurch gekennzeichnet, daß als Lasersendereinrichtung ein Zeilenscanner (4) vorgesehen ist, der zwei in einem vorgegebenen Winkel α zueinander stehende vertikale Zeilen (5) von Laserstrahlen (A, B) aussendet, daß der Zeilenscanner (4) die Flugzeuge (3) oder Fahrzeuge mit den zwei vertikalen Zeilen (5) von Laserstrahlen in nahezu einem rechten Winkel zur Start- und Landebahn oder zum Rollweg (1) abtastet, daß die Laserempfangseinrichtung die von den Flugzeugen (3) oder Fahrzeugen reflektierten Laserstrahlen empfängt, und daß die der Laserempfangseinrichtung nachgeordnete Auswerteeinheit aus den gemessenen Laufzeiten der reflektierten Laserstrahlen (A, B) beider vertikaler Zeilen (5) und gegebenenfalls unter Berücksichtigung des vorgegebenen Winkels α zwischen den vertikalen Zeilen (5) die Rollführungsdaten ermittelt.

2. Vorrichtung nach Anspruch 1, dadurch gekennzeichnet, daß die Auswerteeinheit aus den reflektierten Laserstrahlen (A, B) die Konturen der mit den Laserstrahlen (A, B) abgetasteten Flugzeuge (3) oder Fahrzeuge bestimmt.

3. Vorrichtung nach Anspruch 1, dadurch gekennzeichnet, daß die Auswerteeinheit durch Vergleich der ermittelten Konturen mit charakteristischen Kenngrößen von Flugzeugen (3) oder Fahrzeugen eine Klassifizierung der erfaßten Flugzeuge (3) oder Fahrzeuge durchführt.

4. Vorrichtung nach Anspruch 1, 2 oder 3, dadurch gekennzeichnet, daß die Auswerteeinheit nach Eintritt eines Flugzeuges (3) oder Fahrzeuges in die von dem Zeilenscanner (4) ausgesandten Laserstrahlen (B) ein "Belegt"-Meldesignal erzeugt.

5. Vorrichtung nach Anspruch 1, 2, 3 oder 4, dadurch gekennzeichnet, daß der die zwei vertikalen Zeilen (5) von Laserstrahlen (A, B) aussendende Zeilenscanner (4) und die Laserempfangseinrichtung im Bereich einer Randbefeuerung einer Start- und Landebahn oder eines Rollweges (1) derart angeordnet sind, daß die ausgesandten und reflektierten Laserstrahlen nahezu in einem rechten Winkel zur Start- und Landebahn oder zum Rollweg (1) verlaufen.

6. Vorrichtung nach Anspruch 5, dadurch gekennzeichnet, daß der Zeilenscanner (4) und die Laserempfangseinrichtung in einem modifizierten Gehäuse eines Unterflurfeuers montiert sind.

7. Vorrichtung nach Anspruch 5, dadurch gekennzeichnet, daß der Zeilenscanner (4) und die Laserempfangseinrichtung in einem modifizierten Gehäuse eines Überflurfeuers montiert sind.

8. Vorrichtung nach Anspruch 5, 6 oder 7, dadurch gekennzeichnet, daß die Versorgung des Zeilenscanners (4) und der Laserempfangseinrichtung mit elektrischer Energie über bereits für die Randbefeuerung installierte Serienkreiskabel erfolgt.

9. Vorrichtung nach Anspruch 8, dadurch gekennzeichnet, daß über die für die Randbefeuerung installierte Serienkreiskabel auch eine Datenkommunikation durchgeführt wird.
